# EUROPEAN PATENT APPLICATION

(11) **EP 3 079 335 A1**
(43) Date of publication of application: **12.10.2016**
(21) Application number: 16164434.9
(22) Date of filing: 08.04.2016
(51) Int. Cl.: H04L 29/06, H04W 88/08, H04W 88/16, H04W 92/04, H04W 40/02

(54) **ROUTING COMMUNICATIONS TRAFFIC**

(30) Priority: 08.04.2015 GB 201505983
(71) Applicant: Vodafone IP Licensing Limited, Newbury, Berkshire RG14 2FN (GB)
(72) Inventor: PATRIKIOS, Nestor, London, Greater London W2 6BY (GB); READ, Simon, London, Greater London W2 6BY (GB); HARDY, Graeme, London, Greater London W2 6BY (GB); SWARAP, Anurag, London, Greater London W2 6BY (GB)
(74) Representative: Boult Wade Tennant

(57) **Abstract**

Method and system for routing communications traffic comprising a mobile network. A plurality of access point names, APNs, located within the mobile network, wherein each APN in the plurality of APNs is associated with a different entity external to the mobile network. Logic configured to receive from a wireless or wired access point an APN presented to the mobile network. Route communications traffic from the wireless or wired access point according to one or more routing parameters specific to the external entity associated with the presented APN.

## Description

### Field of the Invention

The present invention relates to a system and method for routing communications traffic especially over a mobile network.

### Background of the Invention

Mobile Wi-Fi hotspot devices or wireless access points provide Wi-Fi access to the Internet, networks and other services using a mobile telecommunications system backhaul. Therefore, a Wi-Fi enabled device such as a laptop or tablet computer can have access to the Internet in the absence of a fixed line Internet connection usually provided to consumers from a wired Ethernet, cable service, or ADSL line, for example.

Such devices may be known as mobile hotspots or mobile access points. Wireless devices may access such Wi-Fi services using known authentication methods such as WEP or WAP authentication. However, such security measures only protect data confidentiality between the mobile hotspot and wireless device, but do not necessarily provide any security between the mobile hotspot and the mobile base station or beyond into the Internet or other network. This can be problematic where a user wishes to use their mobile device (e.g. cell phone or smart phone) using a mobile Wi-Fi hotspot to connect to a secure server or network such as a corporate domain.

Corporate users may be able to connect by cable or wirelessly to their corporate server within a secure or restricted environment such as a company office, using a Wi-Fi access point, which is itself hard wired into the corporate server perhaps using an Ethernet backhaul. Furthermore, communications traffic can have policies applied to it in line with corporate rules and security requirements. Similar situations arise with other entities such as schools and government offices where different policies may be applied to communications traffic.

However, such a user may not be able to have the same level of connectivity, security or content management when using a mobile Wi-Fi hotspot outside of the office or school environment. For example, passwords and user names may be copied or circumvented and may not provide sufficient security to allow the user unrestricted access to the corporate server or network. The user may also easily or unavoidably have direct and unfiltered access to the internet without application of any policies.

Therefore, there is required a system and method that overcomes these problems.

### Summary of the Invention

Against this background there is provided a system and method for routing communications traffic originating from a device such as a wireless or wired access point or wireless or wired router (e.g. a Wi-Fi hotspot connected to a mobile network via a base station). The wireless or wired access point is configured or provisioned with an access point name. Different wireless or wired access points may be configured with different APNs (groups of wireless or wired access points may all have the same APN configuration). Each APN may be associated with a different company (e.g. company, school, ISP, government organisation, etc.) The mobile network contains each of the different APNs. In other words, this may be a private or specific APN available to only a subset of users (e.g. employees of a company or those with network connection access or privileges to that particular entity).

A wireless or wired access point may be a network interface device is a device that allows other devices (e.g. computers, laptops, smartphones, modems, network switches, etc.) to connect with a remote network (e.g. the internet, an intranet, a company or organisational LAN or other network) using a wired or wireless connection (e.g. USB, Ethernet, WiFi, WiMax, etc.). The wireless or wired access point may include wireless mobile access points, hotspots, modems, USB modems and other wired and wireless (or both) interconnectors. Wired access points and wireless access points have their own particular advantages over each other when operated and combined with any or all of the described features.

Devices (e.g. smart phones, laptops, tablet computers, etc.) may wirelessly (or using wires) connect to the wireless or wired access point or Wi-Fi router so that they may obtain network connectivity (e.g. to a company LAN, the internet or other network). The wireless or wired access point presents its particular APN to the mobile network. The communications traffic may then be routed is a way that is dependent on the particular APN that is presented. Parameters defining this routing behaviour may be associated with each APN, retrieved and/or otherwise acted upon. The different types of routing may include directing the communications traffic to a particular address (specific to the APN). This address may be a local area network of the entity. In other words, a particular APN may route traffic to a particular private network or organisation or entity's LAN. The APN may also cause the communications traffic to be handled in a particular way i.e. in a way different to another APN). For example, the traffic may be filtered differently depending on the particular APN with different policies applied for each different entity. In one example, the entity is a school and so the communications traffic may be restricted to contain content suitable for children. In another example, the entity may be a bank where the communications traffic may be restricted to communications of a particular security level or protocol type. These aspects may be combined so that policies may be applied and the traffic routed to a particular entity (e.g. company or entity LAN).

According to a first aspect there is provided a system for routing communications traffic comprising:
a mobile network;
a plurality of access point names, APNs, located within the mobile network, wherein each APN in the plurality of APNs is associated with a different entity external to the mobile network; and
logic configured to:
   receive from a wireless or wired access point (e.g. a network interface device) an APN presented to the mobile network; and
   route communications traffic from the wireless or wired access point according to one or more routing parameters specific to the external entity associated with the presented APN.

Therefore, entities may provide access to their internal network (or the internet) according to particular rules or parameters. These rules or parameters may be the same or different to those for users operating locally or within their internal network. This can be useful for users who travel or work remotely but require similar access to a network (perhaps secured networks) as provided if they were physically located within the entity (e.g. business premises), for example. The routing parameters may be predetermined and associated with a particular APN in advance. The parameters may be configurable, static or dynamic, for example. The parameters may also or alternatively provide restrictions or privileges for the content, nature, or protocol of the communications traffic directed to an internal network or to the internet.

Advantageously, the one or more routing parameters may include an address of the external entity associated with the presented APN (or another entity). This may be an IP address, for example. Therefore, each APN (or wireless access point) may automatically direct communications traffic to a particular entity. For example, a remote worker may connect over Wi-Fi to the wireless or wired access point, which is provisioned or otherwise set with a particular APN. The wireless or wired access point connects over a cellular connection to a mobile network. The mobile network contains the particular APN, which has a connection or tunnel directly to the entity. Therefore, the remote worker or other user may be provided with access to the entity in a more simplified and straightforward way.

Preferably, the address of the external entity may be a local area network, LAN, and wherein the logic is further configured to route the communications traffic to the LAN. The LAN may be within the entity.

Optionally, the logic may be further configured to authenticate a device with the LAN. The user may log on using any suitable authentication protocol (e.g. username/password, two-factor or certificate). Because the APN links directly (and only) to the LAN (e.g. corporate, company or private LAN) WiFi authentication is not required between the device and the wireless or wired access point (for example, no WEP is required). Only the LAN authentication is necessary (i.e. this provides proxied authentication).

Optionally, the system may further comprise a secure communications tunnel between each APN and each associated external entity. This may increase security. This may be a wired or wireless connection.

Preferably, the system may further comprise a plurality of wireless or wired access points or wireless or wired transceivers (or network interface devices) each having a wireless or wired local area network, LAN, and a cellular interface and provisioned with an address of an APN of the plurality of APNs. Provisioning may be at manufacture, user defined, configurable, fixed, static or dynamic, and/or updatable over a network, for example. The system may also comprise a plurality of the external entity networks. The wireless or wired access points or wireless or wired transceivers may include an IEEE 802.11 transceiver.

The wireless or wired access points or wireless or wired transceivers may include mobile network transceivers. These may include any one or more of: GSM; HSUPA; UMTS; GPRS; 3G; 4G; Enhanced Data rates for GSM Evolution, EDGE; EGPRS; High Speed Packet Access, HSPA; and HSPA+. Other protocols for an air interface may be used. Therefore, these mobile network transceivers provide an interface to the mobile network.

The wireless or wired access point may include a processor configured to respond to an authentication request issued by the server. Different types of authentication procedures may be used including for example, PIN, RSA code generation and username and password combinations. Therefore, user authentication may be required before connection.

The wireless or wired access points may include a battery and/or a mains power supply. Other power sources such as USB, power over Ethernet or vehicle power supplies may be used.

The wireless or wired access points may further include a removable memory interface. This may be used to store or update digital content or security data, for example.

Optionally, the wireless or wired access points may further comprise a GPS receiver. This allows the device to determine its location and change its operation depending on location.

Preferably, each wireless or wired router may further comprise a subscriber identity module, SIM.

Preferably, the SIM of each wireless or wired access point may store the APN address. The SIM may store the APN address or the APN address may be stored elsewhere on the device.

Optionally, the system may further comprise a communications gateway, hub or cleaning hub configured to apply policies to the routed communications traffic and wherein the routing parameters specific to the external entity associated with the presented APN define the applied policies. In other words, the gateway may determine the APN in use by the wireless or wired access point and apply a policy or a set of policies to the traffic specific to each different APN. For example APNs associated with a school may be associated with a policy that may remove or filter or block access to material on the internet inappropriate for children. Different policy types may be used and applied. APNs may have common policies or policies specific to each one.

Optionally, the policies may include any one or more of: filters, white listed addresses, black listed addresses, protocol restriction, and/or content restriction.

Preferably, the communications gateway may be further configured to route the communications traffic to and from the internet. However, it may also route communications traffic to another network (for example a network of one of the external entities).

According to a second aspect there is provided a method for routing communications traffic through a mobile network having a plurality of access point names, APNs, the method comprising the steps of:
associating each APN in the plurality of APNs with a different entity external to the mobile network;
receiving from a wireless or wired access point an APN presented to the mobile network; and
routing communications traffic from the wireless or wired access point according to one or more routing parameters specific to an external entity associated with the presented APN.

Optionally, the one or more routing parameters may include an address of the external entity associated with the presented APN.

Optionally, the method may further comprise the step of applying policies to the routed communications traffic and wherein the routing parameters specific to the external entity associated with the presented APN define the applied policies.

Preferably, the communications traffic may originate from a device communicating wirelessly with the wireless access point or network interface device. The device may be a computer, UE, tablet computer, laptop, mobile telephone or other user device.

Optionally, the method may further comprise authenticating the device with a LAN. The user may log on using any suitable authentication protocol (e.g. username/password, two-factor or certificate). Because the APN links directly (and only) to the LAN (e.g. corporate, company or private LAN) WiFi authentication is not required between the device and the wireless or wired access point (for example, no WEP is required). Only the LAN authentication is necessary (i.e. proxied authentication). In other words, the device can connect to a wireless or wired access point and go through a single authentication to connect to a LAN remotely in a similar way to if the device was connecting to the LAN from within an organisation or premises (i.e. locally).

Advantageously, the policies may be applied at an internet or other network gateway.

According to a further aspect there may be provided a computer program comprising program instructions that, when executed on a computer cause the computer to perform the method described above.

The computer program may be stored on a computer-readable medium or transmitted as a signal.

The computer system may include a processor such as a central processing unit (CPU). The processor may execute logic in the form of a software program. The computer system may include a memory including volatile and non-volatile storage medium. A computer-readable medium may be included to store the logic or program instructions. The different parts of the system may be connected using a network (e.g. wireless networks and wired networks). The computer system may include one or more interfaces. The computer system may contain a suitable operating system such as UNIX, Windows (RTM) or Linux, for example.

It should be noted that any feature described above may be used with any particular aspect or embodiment of the invention.

### Brief description of the Figures

The present invention may be put into practice in a number of ways and embodiments will now be described by way of example only and with reference to the accompanying drawings, in which:
FIG. 1 shows a schematic diagram of a system for routing communications traffic including a wireless access point, given by way of example only;
FIG. 2 shows a schematic diagram of a further system for routing communications traffic, including a wireless access point;
FIG. 2a shows a schematic diagram of a further system for routing communications traffic, including a wireless access point;
FIG. 3 shows a flow chart of a method for routing communications traffic;
FIG. 4 shows three separate perspective views of the wireless access point of figures 1 and 2;
FIG. 5 shows a sequence diagram schematically showing interactions between components within a system for routing communications traffic provided as an illustrative example;
FIG. 6 shows a sequence diagram schematically showing further interactions between components within the system of figures 1 and 2;
FIG. 7 shows a sequence diagram showing further interactions between the components of the system of figures 1 and 2;
FIG. 7a shows a sequence diagram showing further interactions between the components of the system of figures 1 and 2;
FIG. 7b shows a sequence diagram showing further interactions between the components of the system of figures 1 and 2;
FIG. 8 shows a sequence diagram showing further interactions between the components of the system of figures 1 and 2;
FIG. 9 shows a schematic diagram of a screenshot of an administration page for the device of figure 4;
FIG. 10 shows a screenshot from a wireless device attempting to gain access to the wireless access point of figure 4; and
FIG. 11 shows a further screenshot of the wireless device attempting to gain access to the wireless access point of figure 4.

It should be noted that the figures are illustrated for simplicity and are not necessarily drawn to scale.

### Detailed description of the preferred embodiments

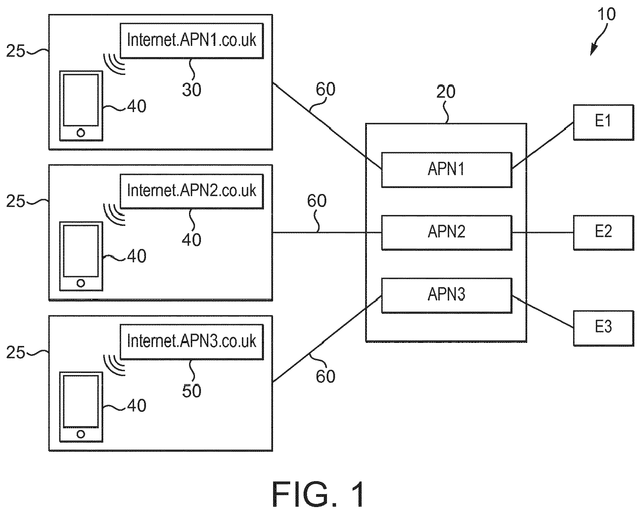

Figure 1 shows a schematic diagram of a system 10 used to route communications traffic. This diagram shows components at a high level with only those necessary for this explanation illustrated. Like features and components have the same or similar reference numerals.

A mobile network 20 contains all of the components used to achieve cellular connectivity including base stations, switches and other infrastructure (not shown in this figure). In addition to these components, the mobile network 20 contains a plurality of access point names (APN) APN1, APN2 and APN3. The mobile network 20 can contain any number of APNs. An APN is a gateway between a mobile network and other computer networks or the internet. Typically, a mobile network would contain few or only a single APN in order to provide internet access to mobile users. The address of this APN (e.g. IP address or URL) would be stored on each user's mobile device or a wireless access point so that telecommunications traffic may be directed through the mobile network and on to the internet. APNs of this type are not associated with any particular entity external to the mobile network but instead provide a gateway for all users of the mobile network.

APN1, APN2 and APN3 of figure 1 are instead associated with external entities E1, E2 and E3. These entities E1, E2 and E3 are external to the mobile network 20. For example, these external entities may be companies, schools, government organisations or other bodies having their own network.

Users at different locations 25 have access to a wireless access point 30, 40, 50. Each wireless access point 30, 40, 50 in this example includes a Wi-Fi transceiver for connecting locally with a device 40 and a cellular transceiver for connecting with the mobile network 20 over a cellular connection 60 (e.g. via a mobile base station). Each wireless access point 30, 40, 50 includes an address of one of the APNs located within the mobile network 20. These APNs may be embodied within a server (e.g. a virtual server) or other component inside the mobile network 20. Therefore, communications traffic originating at the device 40 is received wirelessly by the wireless access point 30, 40, 50. The wireless access point 30, 40, 50 presents the address of the APN, e.g. internet.apnl.co.uk to the mobile network 20, which directs this traffic to the APN with that address (in this example APN1).

APN1 has a dedicated (or dynamic) data connection with entity E1, APN2 has a dedicated data connection to entity E2 and APN3 has a dedicated data connection to entity E3. In this way, communications traffic is routed from each of the wireless access points 30, 40, 50 to its respective entity E1, E2, E3. The data connections may be secured, protected, direct, or over the public internet, for example.

Logic within the mobile network 20 provides this routing based on the particular APN address that is presented. Therefore, the user of the device 40 can communicate directly with a predetermined entity E1, E2, E3 without requiring additional steps such as setting up remote systems or sessions or desktop replications, etc.

The communications traffic is routed according to one or more routing parameters specific to the external entities E1, E2, E3 associated with the presented APN. In the example shown in figure 1 the routing parameters may include the network address of each particular external entity. The routing parameters are not shown in this figure.

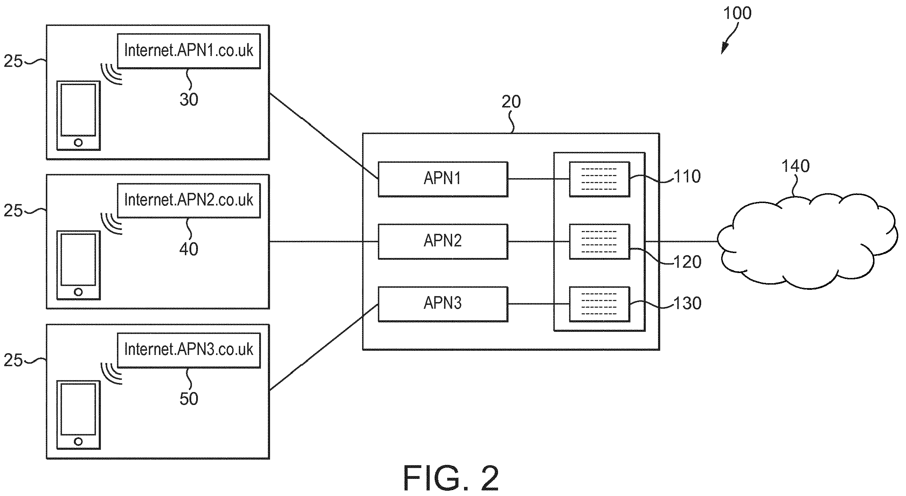

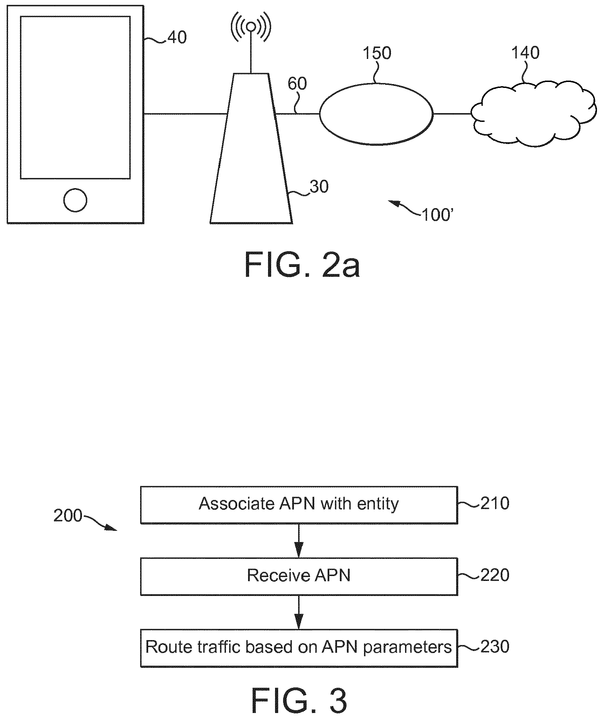

Figure 2 shows a schematic diagram of a further example system 100 for routing communications traffic. However, whilst the operation of this alternative system 100 is similar to that of system 10 described with reference to figure 1, all of the communications traffic is directed to the internet 140. As in the embodiment shown in figure 1, the system 100 of figure 2 uses wireless access points 30, 40, 50 provisioned with the addresses of APN1, APN2, APN3. These APNs are contained within mobile network 20' and when a particular APN address is presented to the mobile network 20' from a particular wireless access point 30, 40, 50 it is directed to the respective APN. Each APN (APN1, APN2, APN3) is associated with an external entity. However, the communications traffic is routed to the internet 140, as described above rather than to that particular external entity. Routing of this communications traffic is achieved according to the routing parameters 110, 120, 130 associated with that particular APN and in turn that the associated entity E1, E2, E3 (not shown in this figure). Rather than the address of the external entity, the routing parameters are policies or web policies applied to the telecommunications traffic. In other words, policies may be applies to the telecommunications traffic according to rules, requirements, restrictions, privileges, etc. specific to each external entity E1, E2, E3. These policies (i.e. routing parameters) may be predetermined, static or dynamic and updated as necessary if required. Therefore, when a policy or parameters needs to be updated, then this can be achieved centrally within the mobile network 20' and no change is required at each user location 25 or at each wireless access point 30, 40, 50.

Figure 2a shows a higher level schematic diagram of a system 100' for connecting to the internet 140. Again, one or more mobile devices 40 may connect wirelessly with a wireless access point 30 (e.g. a MiFi router). The wireless access point 30 is provisioned or contains the address of an APN of or within a cleaning hub 150 that applies particular web policies. The policies may be specific to the APN. Once the policies are applied then any traffic is routed to the internet 140 according to the one or more policies.

Therefore, any device connecting to the wireless access point 30 may only access the internet 140 with particular policies applied to the traffic (e.g. type, content, address, etc.). This can avoid the need to apply policies to each individual device 40 (e.g. parental controls) or the need to ensure that any such policies or controls have not been circumvented or disabled on the device 40 or the wireless access point 30.

Furthermore, polices, controls or other restrictions may be updated and maintained centrally (at the cleaning hub 150) rather than at each wireless access point 30 or device 40. The wireless access point 30 only needs to have a particular APN address set or provisioned for this to be achieved, further simplifying maintenance and management.

One or more cleaning hubs 150 may be used. A single cleaning hub 15 may have multiple APN addresses and apply different policies, restrictions or filters based on APN address. Alternatively, each cleaning hub 150 may have a single APN address. More than one device 40 may connect with each wireless access point 30. More than one wireless access point 30 may be provisioned with the same APN address, for example.

Any or all of the features of system 10, system 100 and system 100' may be combined. In other words, rather than routing traffic to the internet 140, communications traffic may be routed to the external entities E1, E2, E3 associated with each APN but with particular policies applied within the mobile network. Each entity may have more than one APN and more than one set of parameters (e.g. for different user types).

Figure 3 shows a flowchart of a method used to route communications traffic. This method may be used with a system 10 described with regards to figure 1 or system 100 described with regards to figure 2. The method 200 starts with the step of associating APN with a particular external entity. The APN is received from the wireless access point 30, 40, 50 over a cellular connection 60 at step 220. The communications traffic is routed based on parameters 110, 120, 130 associated with a particular APN (APN1, APN2, APN3) at step 230.

The parameters may include policies and/or addresses of the terminating network or entity, for example.

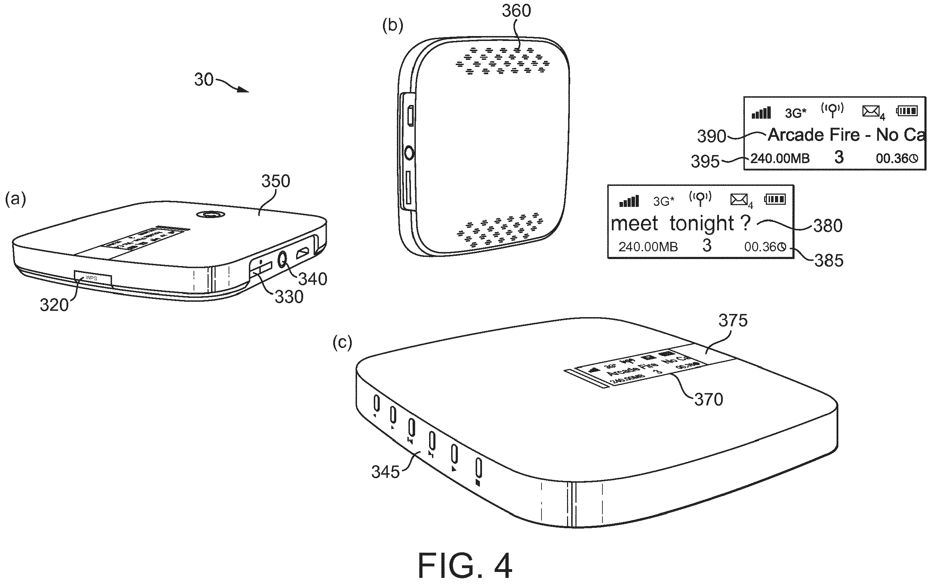

Figure 4 shows three perspective views of an example mobile wireless access unit 30, 40, 50 according to one embodiment. The mobile wireless access unit 30 provides a single self-contained device for providing a connection to the Internet or network (e.g. within entity E1, E2, E3) over an air interface 60 to a remote mobile base station and Wi-Fi hotspot functionality. Perspective view (a) shows the mobile wireless access unit 30 placed horizontally. An on-off switch 320 switches power to the unit. A Wi-Fi protected set up (WPS) pushbutton 330 enables pushbutton Wi-Fi connectivity and security setup. A 3.5mm audio out jack 340 is supplied to enable the unit to act as an optional audio distribution unit. A USB port 350 is also provided in this particular example to enable additional connectivity to an external storage device or a network attached storage (NAS) device. The mobile wireless access unit 30 has a wireless transceiver (not shown) and one or more antennas, which provides Wi-Fi connectivity and a mobile network transceiver for connecting to a mobile base station or cellular network. The mobile wireless access unit 30 may also contain a processor (not shown in this figure) for carrying out methods or program instructions. The processor may be a Qualcomm 7255 or 8220, for example.

Perspective view (b) shows the mobile wireless access unit 30 placed vertically revealing its underside incorporating one or more speakers 360, which provide audio output. Perspective view (c) illustrates audio navigation buttons 345 and a visual display 370 provided on the top surface of the unit when viewed horizontally. The visual display 370 may be an OLED display or other display technologies, for example.

The visual display 370 may provide various visual indications and information. For example, this may include a SMS ticker 380, an indication of the time connected to a network 385, the name of a particular audio track being played 390 and/or the quantity or rate of data transfer 395.

The features of the mobile wireless access unit 30 relating to audio functionality may or may not be present and are optional features of the device. The mobile wireless access unit may store the APN and other configuration parameters.

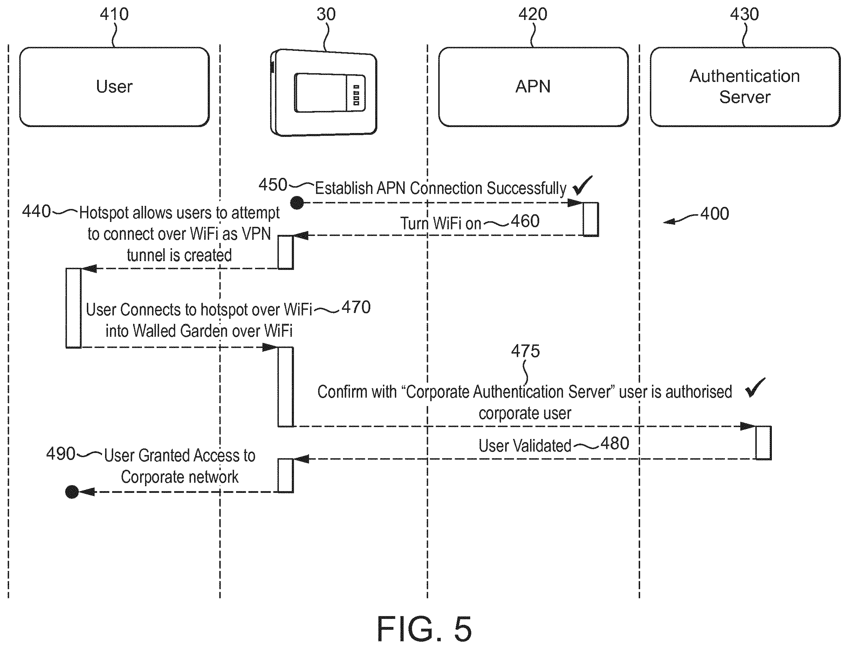

Figure 5 shows a sequence diagram indicating various steps and procedures used as an example method 400 to route communications traffic. In this example, a user of a wireless device is provided access to a server of an entity E1, E2, E3 using the mobile wireless access unit 30. The server may be a corporate server, a secure server, a server providing internet or intranet access or other type of network server, for example. This method 400 is provided as an illustrative example of a procedure routing communications traffic.

The actors in this sequence diagram are the user 410 (using a wireless device), the mobile access point (also described herein as a mobile wireless access unit 30), an APN) 420 and an authentication server 430. The APN in an example of one of the APNs (APN1, APN2, APN3) described above. The method 400 may be initiated from a request originating with the wireless device of the user 410. The first step in the method 400 is to successfully achieve a connection 440 between the APN 420 and the mobile wireless access unit 30. A Wi-Fi transceiver on the mobile wireless access unit 30 or hotspot is then turned on or made available or visible at step 450. The mobile wireless access unit 30 then allows the user 410 to attempt to connect over Wi-Fi (or by a wired connection) as a connection is created at step 460.

The user 410 connects to the mobile wireless access unit or hotspot 30 over the Wi-Fi connection into a "walled garden" or secured domain at step 470. A confirmation request is then sent from the mobile wireless access unit 30 through the connection to the authentication server 430 to confirm that the user 410 is an authorised user at step 475. The authentication server 430 may be part of the server or network that the user wishes to gain access to and the authorisation provided by the authentication server 430 authorises use of the server by the user 410.

Upon confirmation that the user 410 is an authorised user for the server, a user validation confirmation 480 is sent back to the mobile wireless access unit 30. This allows access to be granted to the server or secure network at step 490.

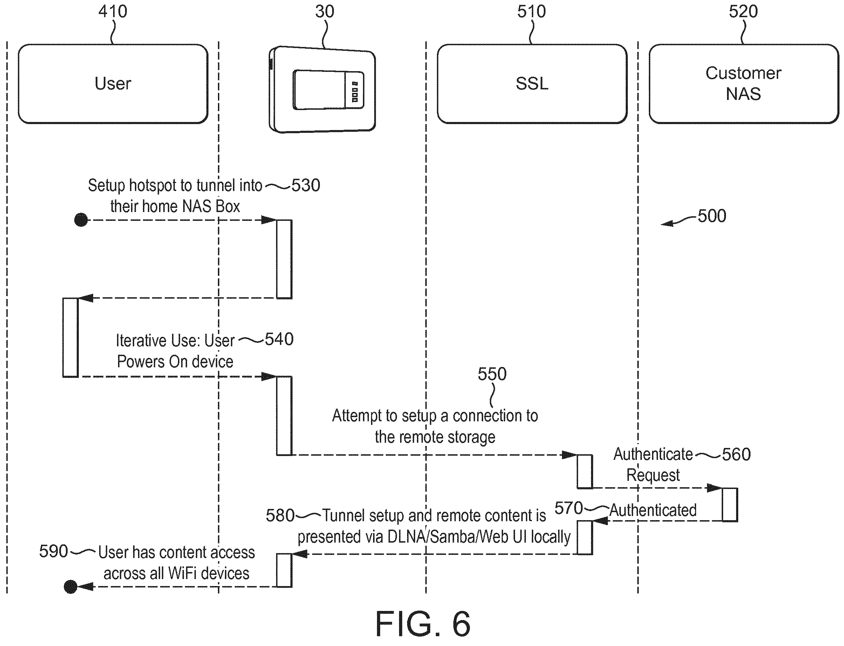

Figure 6 shows a sequence diagram of a method 500 for providing remote access to digital media stored on a network attached storage (NAS) device 520 using the mobile wireless access unit 30 using a secure sockets layer (SSL) 510. This method may be carried out before or after the method 300 described with respect to figure 5. At step 530, the user 410 operating the wireless device attempts to set up the mobile wireless access unit 30 or hotspot to connect into a home or other remote NAS device 520. The mobile wireless access unit 30 is powered on by the user at step 540. At step 550, an attempt is made to initiate a connection using SSL 510 security with the remote storage NAS device 520 (other security protocols may be used). The NAS device 520 receives an authentication request at step 560 and authenticates the user at step 570 (or denies access) via the SSL 510 security layer. At step 580, a connection is set up and content may be provided via a server interface located on the mobile wireless access unit 30. This server interface may be in the form of a DLNA, SAMBA, or web UI server, for example. The user 410 may be provided with content access across any Wi-Fi connected device at step 590. Therefore, in particular or alternative embodiments a user may have a dedicated APN for their own NAS. However, in general, an APN will be provided for multiple users or across an entire organisation (e.g. school or company). In which case, greater storage may be provided than can usually be achieved with a NAS.

The audio functionality of the mobile wireless access device 30 (i.e., speakers 360, 3.5mm audio out port 340, audio controls 345 and track display 390) may be used to play and control content received from the NAS device 520.

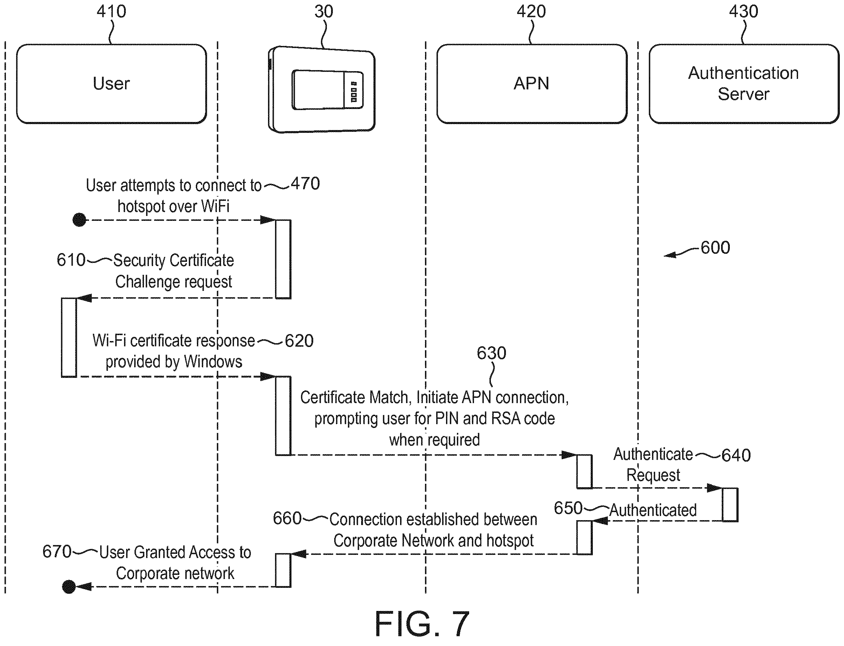

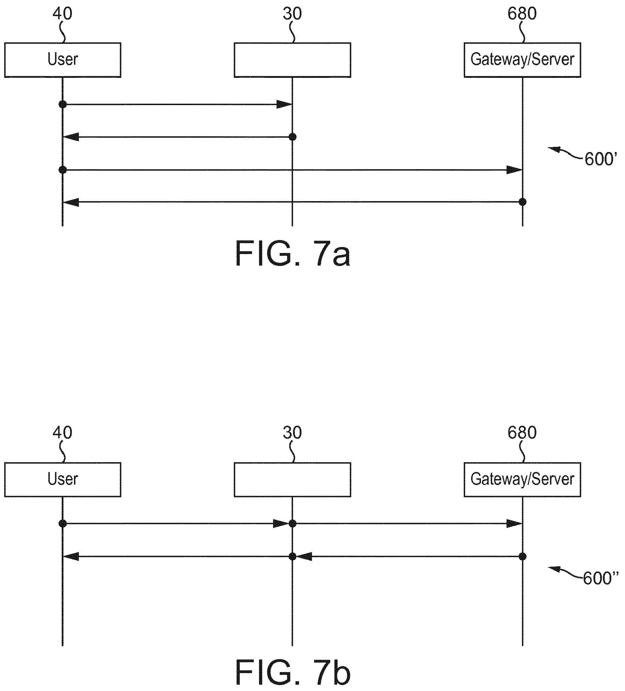

Figure 7 shows a sequence diagram illustrating a method 600 for granting access to the user 410 to a secure or corporate network server (or other type of server). Like steps and actors are provided with the same reference numerals as described with reference to earlier figures. The method 500 described with reference to figure 6 may be performed before or after method 600 or not at all.

The user 410 uses the wireless device to attempt to connect to the hotspot or mobile wireless access unit 30 over the Wi-Fi connection. In response, the mobile wireless access unit 30 issues a security certificate challenge request to the wireless device at step 610. In response, the wireless device of the user 410 may provide a certificate using the Wi-Fi connection at step 620. This may be provided by the wireless device's operating system such as Windows, for example. This response may be provided without user interaction or following user confirmation to transmit or send the digital certificate. At the mobile wireless access unit 30, confirmation (or failure) of a certificate match is carried out and connection or setup is initiated upon success at step 630. The user may be prompted to supply a PIN number and/or RSA code during this step. Alternatively, the mobile wireless access unit 30 may provide such passwords and codes through the APN 420 without requiring the user to supply this information as the identity of the user has already been proven by supplying a matched certificate. The user's credentials or other identifier(s) are provided as an authentication request 640 to the authentication server 430. Upon authentication (step 650), a connection may be established between the server, secure network or corporate network and the mobile wireless access unit 30 at step 660, which results in the mobile wireless access unit 30 granting access to the server or network at step 670.

Connection between the wireless device operated by the user 410 and the mobile wireless access unit 30 may be achieved over a Wi-Fi or IEEE 802.11 protocol, for example. Other wireless connections may be used. Data transfer between the mobile wireless access unit 30 and the authentication server 430 via the APN 420 may be achieved over the air though a mobile network operator using a mobile base station and operating a suitable protocol such as GSM, 3G, 4G, CDMA, GPRS or EDGE system, for example. Therefore, the mobile wireless access unit 30 may contain similar components to a cellphone or mobile handset including a SIM card and mobile transceiver, for example.

The mobile wireless access unit 30 may be provided with one or more security certificates for a particular organisation or corporation so that any wireless devices with a particular security certificate or matching certificate may be authenticated. The certificate may be set to expire at a certain time. This security certificate may be provided in the factory at the time of manufacture of the mobile wireless access unit 30 later on. The security certificate may be revoked or replaced at intervals or under certain circumstances.

Corresponding security certificates may be provided to the user's wireless device over the air (for example, should the wireless device be a mobile telephone), on a removable memory card or supplied when the device is manufactured or commissioned. When the user's wireless device receives a certificate, certain parameters, policies or configurations may be updated or installed to prevent the wireless device from accessing the Internet or other networks without going through the server, secured network or corporate environment (i.e. policies associated with the APN 420). Therefore, circumvention of any security measures, monitoring or restrictions in place and enforced by the server or corporate network may be reduced or eliminated. Alternatively, the wireless device may not be provided from the factory with such settings, policies and restrictions.

Figure 7a shows a sequence diagram of the method 600 at a higher level. In this more general method 600' the user (device) 410 connects with the wireless access point 30 (or network interface device) typically over WiFi but a wired connection may also be used (e.g. Ethernet or USB). WiFi (or other) authentication is achieved between the user 410 and the wireless access point 30. The user 410 may then connect through the APN to a server (shown as a combined gateway/server 680 in the figure) using certification or other authentication.

Figure 7b shows a further method 600" describing a use case in which the device 40 may be authenticated as if it were on a LAN (e.g. local, private, organisation, company or secure LAN). In other words the LAN may be extended beyond (remote) and into the cloud in one go. The wireless access point 30 may operate as using "proxied authentication". No WiFi authentication may be required as the APN is directly linked to the LAN (e.g. private, corporate or company network). The user may then authenticate directly with the network to gain access.

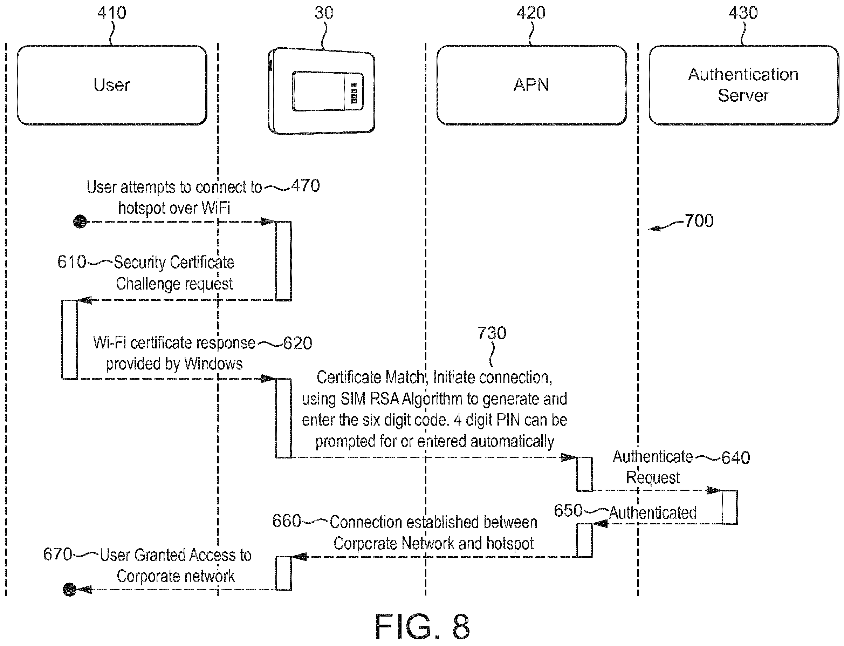

Figure 8 shows a similar sequence diagram to that of figure 7 illustrating a further method 700 for routing communications traffic and providing access to a server, corporate network and/or the Internet using the mobile wireless access unit 30. Similar method steps to that shown in figure 4 are provided with the same reference numerals.

The difference between the method 600 illustrated in figure 7 and the method 700 illustrated in figure 8 mainly concerns the authentication step following certificate match. Other types of authentication may or may not be used. Following a match, at step 730, a connection is initiated via the APN 420. However, a SIM card within the mobile wireless access unit 30 may be used to perform a RSA cryptographic algorithm to generate a code, which may be six (or other) digits, for example. This generated code together with a PIN (e.g. four or more digits) may be provided manually or automatically through the APN 420 as an authentication request 640 at the authentication server 430. Following authentication 650, the connection may be established between the server or corporate network and the mobile wireless access unit 30 at step 660, which in turn provides access over a Wi-Fi connection to the wireless device of the user at step 670.

The wireless or Wi-Fi connection between the wireless device and the mobile wireless access unit 30, which is securely connected to the server is across a cellular network including the base station or other node. The mobile wireless access unit 30 connects to the base station through an air interface (uplink/downlink) and the base station is connected to the server through a backhaul, which may include the public switched telephone network (PSTN). The mobile wireless access unit 30 administers the connection via the APN 430, Wi-Fi security and certificate checking procedures (if these are necessary). More than one wireless device may be connected to the mobile wireless access unit 30 at any one time and the mobile wireless access unit 30 may move to a different base station or cell in a cellular network, especially when moving between locations. One or more mobile wireless access units 30, base stations and/or servers may be used with the system.

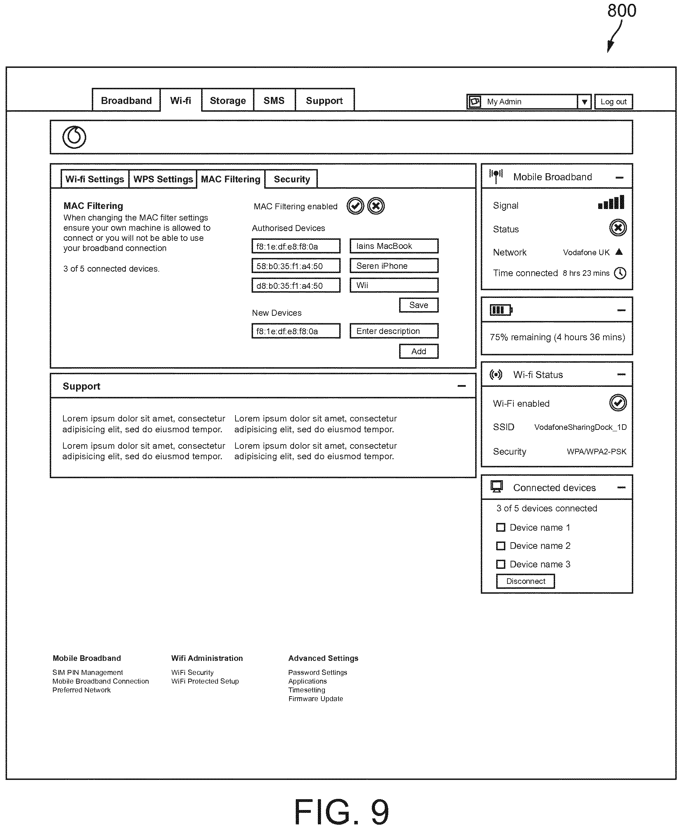

Figure 9 shows a screenshot 800 of an administration or status page indicating the operation of the mobile wireless access unit 30 as viewed from a connected computer or terminal (not shown). On the right hand side of the screenshot 800, the mobile broadband status 810 is indicated in terms of cellular signal strength, connected network and time connected, for example. Below this is an indication of remaining battery power for a battery within the mobile wireless access unit 30. Mains or wired power sources may also be used. The Wi-Fi status 820 may be provided showing whether this is enabled or disabled, its SSID and the particular Wi-Fi security mode in operation. Several devices may be connected by Wi-Fi to the mobile wireless access unit 30 and a list of these devices may be shown below the Wi-Fi status.

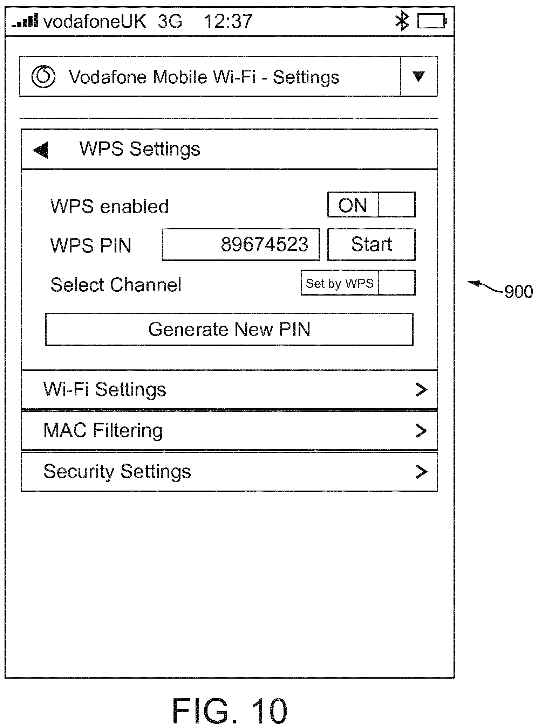

Figure 10 shows a screenshot 900 on a user's wireless device. In this example the wireless device 40 is a mobile phone or smart phone. The screenshot shows wireless security settings including the particular WPS PIN being used. However, receipt of a request for a security certificate and provision of this security certificate to the mobile wireless access unit 30 may not indicated in this figure as the certificate may be provided automatically on request.

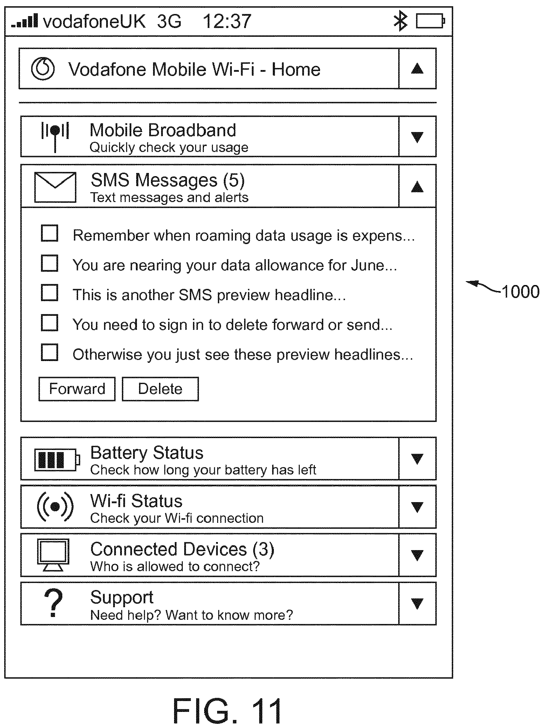

Figure 11 shows a further screenshot 1000 from the wireless device 40. This screenshot 1000 indicates the status of mobile broadband being provided by the mobile wireless access unit 30 including the number of connected devices, any SMS messages received and broadband usage, for example.

The methods described with reference to figures 5 to 8 further include the routing of the communications traffic according to the parameters associated with the particular APN presented by the wireless access point 30 (i.e. in general and according to the examples provided with reference to figures 1 and 2).

As will be appreciated by the skilled person, details of the above embodiment may be varied without departing from the scope of the present invention, as defined by the appended claims.

For example, the wireless device 40 may be a laptop, computer, cell phone, tablet computer or other portable device. The order of creating the connection to the server and connecting wirelessly to a wireless device may be different, reversed or carried out at the same time. The device may have a wired connection to replace the Wi-Fi connection.

Additional security measures may be put in place. For example, a VPN connection may be set up between the wireless (or wired) access point and the entity or network. Connections over the APN do not necessarily require the certificate authentication technique or other security measures in some embodiments.

Many combinations, modifications, or alterations to the features of the above embodiments will be readily apparent to the skilled person and are intended to form part of the invention. Any of the features described specifically relating to one embodiment or example may be used in any other embodiment by making the appropriate changes.

## Claims

1. A system for routing communications traffic comprising:
a mobile network;
a plurality of access point names, APNs, located within the mobile network, wherein each APN in the plurality of APNs is associated with a different entity external to the mobile network; and
logic configured to:
receive from a wireless or wired access point an APN presented to the mobile network; and
route communications traffic from the wireless or wired access point according to one or more routing parameters specific to the external entity associated with the presented APN.

2. The system of claim 1, wherein the one or more routing parameters include an address of the external entity associated with the presented APN.

3. The system of claim 2, wherein the address of the external entity is a local area network, LAN, and wherein the logic is further configured to route the communications traffic to the LAN.

4. The system of claim 3, wherein the logic is further configured to authenticate a device with the LAN.

5. The system according to any of claims 2 to 4, further comprising a secure communications tunnel between each APN and each associated external entity.

6. The system according to any previous claim further comprising a plurality of wireless or wired access points each having a wireless or wired local area network, LAN, and a cellular interface and provisioned with an address of an APN of the plurality of APNs.

7. The system of claim 6, wherein each wireless router further comprises a subscriber identity module, SIM.

8. The system of claim 7, wherein the SIM of each wireless or wired access point stores the APN address.

9. The system of claim 1 further comprising a communications gateway configured to apply policies to the routed communications traffic and wherein the routing parameters specific to the external entity associated with the presented APN define the applied policies.

10. The system of claim 9, wherein the policies include any one or more of: filters, white listed addresses, black listed addresses, protocol restriction, and/or content restriction.

11. The system of claim 9 or claim 10, wherein the communications gateway is further configured to route the communications traffic to and from the internet.

12. A method for routing communications traffic through a mobile network having a plurality of access point names, APNs, the method comprising the steps of:
associating each APN in the plurality of APNs with a different entity external to the mobile network;
receiving from a wireless or wired access point an APN presented to the mobile network; and
routing communications traffic from the wireless or wired access point according to one or more routing parameters specific to an external entity associated with the presented APN.

13. The method of claim 12, wherein the one or more routing parameters include an address of the external entity associated with the presented APN.

14. The method of claim 12 further comprising the step of applying policies to the routed communications traffic and wherein the routing parameters specific to the external entity associated with the presented APN define the applied policies.

15. The method according to claim 14, wherein the policies are applied at an internet gateway.
